(19) **Europäisches Patentamt**

**European Patent Office**

**Office européen des brevets**

(11) Veröffentlichungsnummer: **0 141 137**
**B1**

(12) # EUROPÄISCHE PATENTSCHRIFT

(45) Veröffentlichungstag der Patentschrift:
23.08.89

(21) Anmeldenummer: **84110377.3**

(22) Anmeldetag: **31.08.84**

(51) Int. Cl.⁴: **B 01 D 19/04,** C 10 M 173/00 //
C10N40:22,(C10M173/00,
159:06, 159:08)

(54) **Verwendung von Wollwachs als Entschäumer für Schmier- oder Kühlmittelemulsionen.**

(30) Priorität: **09.09.83  DE 3332584**

(43) Veröffentlichungstag der Anmeldung:
**15.05.85 Patentblatt 85/20**

(45) Bekanntmachung des Hinweises auf die Patenterteilung:
**23.08.89 Patentblatt 89/34**

(84) Benannte Vertragsstaaten:
**AT BE CH DE FR GB IT LI NL SE**

(56) Entgegenhaltungen:
**EP-A-0 062 292**
**DE-A-2 947 822**
**DE-C-708 331**
**GB-A-767 300**

**CHEMICAL ABSTRACTS, Band 93, Nr. 8, August
1980, Seite 222, Zusammenfassung Nr. 75523b,
Columbus, Ohio, US; & SU-A-721 469 (ZAPOROZHE
MACHINE-BUILDING INSTITUTE) 15-03-1980**

(73) Patentinhaber: **Meinhardt, Horst, Bahnhofstrasse 1,
D-5419 Herschbach (DE)**

(72) Erfinder: **Zimzik, Henry, Dipl.- Ing., Kirchstrasse 7,
D-5419 Marienhausen (DE)**

(74) Vertreter: **Goddar, Heinz J., Dr., FORRESTER &
BOEHMERT Widenmayerstrasse 4/I, D-8000
München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von Wollwachs als Entschäumer für Schmier- oder Kühlmittelemulsionen.

Wässrige Emulsionen werden für die verschiedensten Zwecke eingesetzt, insbesondere in der Kosmetik, aber auch im Lebensmittel- oder technischen Bereich.

Bei den meisten Anwendungen derartiger Emulsionen ist es unerwünscht, daß diese schäumen. Das Schäumen einer Emulsion ist besonders nachteilig, wenn es sich um Emulsionen handelt, die als Schmierstoffe oder Kühlemulsionen eingesetzt werden. Durch das Schäumen wird die lokale Konzentration der Emulsion erniedrigt und somit der erwünschte Zweck der Kühlung bzw. Schmierung nicht erreicht.

Die bisher verwendeten Entschäumer waren üblicherweise Silikonabkömmlinge, die jedoch schwerwiegende Nachteile besitzen. So sind die Silikone giftig und zudem teuer.

Die SU-A-721 469 beschreibt ein unter anderem durch Zusatz von Lanolin verbessertes Schmiermittel zum Kaltprägen von Metall. Ebenfalls zur Verbesserung der Schmiereigenschaften schlägt die GB-A-767 300 den Zusatz von Lanolin zu Schneidflüssigkeiten vor. Als geeignetes oberflächenaktives Mittel bei der Umsetzung von Alkalimetallborat mit einem Fettöl oder einer Fettsäure, wobei das resultierende Reaktionsprodukt (als Korrosionsinhibitor und Biozid) einem Mineralöl zugemischt werden soll, ist in der DE-OS 2 947 822 unter anderem auch Lanolin genannt.

Die DE-C-708 331 betrifft die Verwendung von bestimmten Esterwachsen, wie z. B. Montanwachs oder auch Wollwachs, als schaumverhindernden Zusatz zu Alkalisulfonaten oder -naphtenaten enthaltenden Kohlenwasserstoffemulsionen. Einerseits wird mit den dort beschriebenen Mengen an zugesetztem Wollwachs von 0,001 bis 0,5 % bei anders zusammengesetzten Schmier- oder Kühlmittelemulsionen kein befriedigender Entschäumungseffekt erreicht, andererseits sind größere Mengen an Wollwachs nicht ohne weiteres in den entsprechenden Mischungen emulgierbar.

Der Erfindung liegt daher die Aufgabe zugrunde, einen für alle bekannten Schmier- und Kühlmittelemulsionen hochwirksamen Entschäumer zur Verfügung zu stellen, der darüber hinaus auch noch ungiftig ist und zu keinen allergischen Reaktionen beim Bedienungspersonal führt.

Die Aufgabe wird erfindungsgemäß durch die gattungsgemäße Verwendung von Wollwachs gemäß dem Kennzeichen des Hauptanspruchs gelöst.

Eine besonders vorteilhafte Ausführungsform der Erfindung ist im Unteranspruch 2 beschrieben.

Die Verwendung der erfindungsgemäßen Emulsion mit einem entsprechenden Gehalt an Adeps lanae anhydricum bewirkt bei den angesprochenen Schmier- oder Kühlmittelemulsionen einen optimalen Entschäumungseffekt, während sie gleichzeitig für das Bedienungspersonal physiologisch völlig unbedenklich ist. Besonders bevorzugt ist daher die Verwendung in physiologisch ebenfalls unbedenklichen Schmier- und Kühlmittelemulsionen, wie sie beispielsweise in der EP-A-62 292 beschrieben sind.

Derartige hautverträgliche Emulsionen arbeiteten zwar sehr zufriedenstellend insofern, als die gefürchtete "Rohölkrätze", die bei Arbeitern bis zur Arbeitsunfähigkeit führen konnte, nicht mehr auftrat, unvorteilhaft war jedoch, daß die bekannte Emulsion stark schäumte und daher ihre Wirkung als Schmiermittel noch nicht optimal war. Die Verwendung bekannter Silikonverbindungen führte zwar zu zufriedenstellenden Entschäumungseffekten, hatte aber den Nachteil einer physiologisch schlechten Verträglichkeit. Ein weiterer wesentlicher Nachteil bestand darin, daß behandelte Werkstücke nicht mit Schutzanstrichen versehen werden konnten. Der Einsatz von Esterwachsen, wie sie in der DE-C-708 331 beschrieben sind, scheiterte dahingegen an der ungenügenden Emulgierbarkeit der benötigten Mengen.

Durch den erfindungsgemäßen Einsatz einer Emulsion aus Adeps lanae anhydricum und einem Emulgator konnte daher erstmals ein hochwirksames und preiswertes Antischaummittel zur Verfügung gestellt werden, das insbesondere auch bei den genannten hautverträglichen Emulsionen einsetzbar ist.

Weitere Vorteile und Merkmale der Erfindung ergeben sich aus der nachfolgenden Beschreibung, in der die Erfindung anhand von Beispielen erläutert ist.

## Beispiel I

**Herstellung eines Schneid-, Bohr- oder Schleifemulsions-Konzentrats**

10 Gew.-Teile eines pflanzlichen Wachses, gewonnen aus Pflanzen der Gattung Copernicia, werden mit 82 Gew.-Teilen einer Mischung bestehend aus 50 Gew.-% $H_2O$, 12,5 Gew.-% Tri-Ethanolamin und 37,5 Gew.-% Di-Ethanolamin, sowie 0,1 Gew.-Teilen Kokosfettsäure- Di-Ethanolamid als Emulgator unter Rühren zum Sieden gebracht und nach Auflösen des Wachses bei Siedetemperatur der Mischung unter weiterem Rühren bis zum Umschlagpunkt im Bereich bei 90°C abgekühlt. Sodann werden 2 Gew.-% eines handelsüblichen Konservierungsmittels untergerührt. Zu der Emulsion werden 1 Gew.-% einer Emulsion, hergestellt aus Adeps lanae anhydricum und bis zu gleichen Gew.-Teilen Emulgator, gegeben, wobei das Verhältnis Tensid : Ölphase 1 : 1 ist. Bevorzugt sind solche Emulgatoren, deren HLB-Wert Dispersionen im Mizellen-Bereich erwarten lassen (HLB 8 - 14).

Diese Emulsion kann auf das etwa 35-fache zur Verwendung als Schleif-, Bohr- oder Schneid-Emulsion mit Wasser verdünnt werden, wobei sich ein pH-Wert zwischen 8 und 10 einstellt.

## Beispiel II

15 Gew.-Teile eines Wachses werden mit 80 Gew.-Teilen einer Mischung bestehend aus 50 Gew.-% $H_2O$, 12,5 Gew.-% Tri-Ethanolamin und 37,5 Gew.-% Di-Ethanolamin und 0,1 Gew.-% eines handelsüblichen nicht-ionischen Emulgators zum Sieden gebracht, und nach vollständiger Aminierung auf eine Temperatur von 50°C abgekühlt. Anschließend werden 1 % eines handelsüblichen Konservierungsmittel sowie 1 % einer Emulsion gemäß Beispiel I zugesetzt. Diese resultierende Emulsion ist ein Konzentrat für die Herstellung von Schneid-, Bohr- oder Schleif-Emulsionen, die am Einsatzort entsprechend verdünnt werden kann.

## Beispiel III

Die in Beispiel I beschriebene Emulsion wird mit 3 Gew.-Teilen Aminoseife versetzt.

Die aminoseifehaltige Emulsion eignet sich ebenfalls zum Einsatz als Bohr-, Schleif- oder Schneidhilfsmittel.

## Beispiel IV

Die Emulsion des Beispiels I wurde auf das 35-fache mit Wasser verdünnt und bei einer Kreissäge mit einem Kreissägeblatt von 15 mm als Schneidhilfsmittel eingesetzt. Die erfindungsgemäße Emulsion arbeitete völlig zufriedenstellend und zeigte auch bei hohen Schneidgeschwindigkeiten keinerlei Schaumbildung.

## Beispiel V

Eine handelsübliche Emulsion aus Mineralölen, als Bohröl eingesetzt, zeigte bei einem Zusatz von 2 % einer Emulsion gemäß der Erfindung eine weit bessere Hautverträglichkeit.

## Beispiel VI

Handelsübliche, vollsynthetische Bohremulsionen erlangten schon bei Zusatz von 5 % einer Emulsion gemäß der Erfindung eine anhaltende zufriedenstellende Entschäumung.

## Beispiel VII

Bei halbsynthetischen Bohremulsionen des Handels, die wegen zu hoher Schaumbildung keine Eignung als Bohremulsion finden konnten, zeigte ein 10 %-iger Einsatz einer Emulsion gemäß der Erfindung eine auffällige Qualitätsverbesserung und eine zufriedenstellende relativ dauerhafte Entschäumung. Eine ausgesprochen gute Eignung als Bohr-, Schleif- und Kühlemulsion wurde im Langzeittest beobachtet.

## Patentansprüche

1. Verwendung von Wollwachs als Entschäumer für Schmier- oder Kühlmittelemulsionen, dadurch gekennzeichnet, daß als Wollwachs eine Emulsion aus Adeps lanae anhydricum und bis zu gleichen Gew.-Teilen eines Emulgators eingesetzt wird, wobei der Gehalt der resultierenden Schmiermittelemulsion an Adeps lanae anhydricum zwischen 1 und 10 Gew.-% liegt.

2. Verwendung nach Anspruch 1, dadurch gekennzeichnet, daß ein nicht-ionischer Emulgator mit einem HLB-Wert von 8 - 14 eingesetzt wird.

## Claims

1. Use of lanolin as an anti-foaming agent for lubricating or cooling emulsions, characterised in that the lanolin used is an emulsion of adeps lanae anhydricum and up to equal parts by weight of an emulsifier, the content of adeps lanae anhydricum in the resulting lubricating emulsion being between 1 and 10 % by weight.

2. Use according to claim 1, characterised in that a non-ionic emulsifier having an HLB value of 8 - 14 is used.

## Revendications

1. Utilisation de cire de laine comme produit antimousse pour les émulsions de lubrifiants et de réfrigérants, caractérisée en ce que il est utilisé comme cire de laine une émulsion d'Adeps lanae anhydricum et jusqu'à de mêmes parties de poids d'un émulsionnant, la teneur de l'émulsion de lubrifiant résultante d'Adeps lanae anhydricum se situant entre 1 et 10 % de poids.

2. Utilisation selon la revendication 1, caractérisée en ce qu'un émulsionnant non ionique est utilisé avec une valeur HLB de 8 - 14.